# EUROPÄISCHE PATENTSCHRIFT

(11) **EP 3 417 186 B1**
(45) Veröffentlichungstag und Bekanntmachung des Hinweises auf die Patenterteilung: **04.09.2019**
(21) Anmeldenummer: 17704253.8
(22) Anmeldetag: 09.02.2017
(51) Int. Cl.: F16D 48/06

(54) **STEUERVORRICHTUNG UND VERFAHREN ZUM BETREIBEN EINES DOPPELKUPPLUNGSGETRIEBES EINES KRAFTFAHRZEUGS**
CONTROL DEVICE AND METHOD FOR OPERATING A DUAL-CLUTCH TRANSMISSION OF A MOTOR VEHICLE
DISPOSITIF DE COMMANDE ET PROCÉDÉ PERMETTANT DE FAIRE FONCTIONNER UNE BOÎTE DE VITESSES À DOUBLE EMBRAYAGE D'UN VÉHICULE AUTOMOBILE

(30) Priorität: 15.02.2016 DE 102016202286
(43) Veröffentlichungstag der Anmeldung: 26.12.2018
(73) Patentinhaber: Audi AG, 85045 Ingolstadt (DE)
(72) Erfinder: BIRK, Andreas, 90402 Nürnberg (DE); WEINHARDT, Mathias, 85051 Ingolstadt (DE)
(86) Internationale Anmeldenummer: PCT/EP2017/052906
(87) Internationale Veröffentlichungsnummer: WO 2017/140576

(56) Entgegenhaltungen:
- WO-A1-2005/008103
- DE-A1-102005 035 885
- DE-B3-102010 018 532
- DE-B4- 19 751 456
- US-A1- 2014 224 613

## Beschreibung

Die Erfindung betrifft ein Verfahren zum Betreiben eines Doppelkupplungsgetriebes eines Kraftfahrzeugs. Durch das Verfahren werden die sogenannte Vorwahlphase für einen Gangwechsel und das Schließen einer der Kupplungen koordiniert. In der Vorwahlphase wird ein einzulegender Sollgang synchronisiert, entsperrt und schließlich eingelegt. Durch das Schließen der Kupplung wird der eingelegte Sollgang mit einer Kurbelwelle des Motors gekoppelt. Zu der Erfindung gehören auch eine Steuervorrichtung für das Doppelkupplungsgetriebe sowie ein Kraftfahrzeug mit dem Doppelkupplungsgetriebe.

Eine besonders enge Abstimmung einer Vorwahlphase mit dem Schließen einer Kupplung ist aus der DE 197 51 456 B4 bekannt. Hierzu wird allerdings die Kupplung, über welche der neue, einzulegende Gang, das heißt der Sollgang, mit der Kurbelwelle des Motors gekoppelt wird, zuvor dauerhaft teilbefüllt betrieben. Mit anderen Worten wird diese Kupplung zwar geöffnet betrieben, ihre Kupplungshydraulik bleibt aber teilbefüllt und ist somit nie bis zu einer Anschlagstellung entleert. Dies ist bei vielen Getriebetypen nicht möglich, da das Entleeren einer ungenutzten, geöffneten Kupplung bis zu ihrer Anschlagstellung notwendig ist, um einen Verschleiß der Kupplungshydraulik und der Kupplung zu verhindern.

Um die Schaltphase von einem Istgang in einen Sollgang zu verkürzen, ist aus der DE 10 2009 059 081 A1 bekannt, die Kupplungshydraulik stoßweise und damit schneller zu befüllen, ohne dass es hierdurch zu einem Überschwingen des einzustellenden Solldruckwerts kommt.

Ein Verfahren zum Schalten eines Doppelkupplungsgetriebes eines Kraftfahrzeugs ist auch aus der WO 2005/008103 A1 bekannt.

Eine weitere Beschreibung eines Doppelkupplungsgetriebes ist aus der DE 10 2008 043 384 A1 bekannt. Aus dieser Veröffentlichung sind vorliegend Fachterme übernommen, wie beispielsweise Berührpunkt (Touch Point), Eingriffspunkt (Point of Engagement, Kiss Point).

In der US 2014/0224613 A1 ist eine hydraulische Kupplung beschrieben.

Aus der DE 10 2005 035 885 A1 ist ein Verfahren zur Steuerung von Schaltvorgängen bei Kraftfahrzeugen mit einem Doppelkupplungsgetriebe bekannt.

Der Erfindung liegt die Aufgabe zugrunde, bei einem Doppelkupplungsgetriebe einen Gangwechsel von einem Istgang zu einem Sollgang innerhalb einer kurzen Umschaltzeit zu bewältigen.

Die Aufgabe wird durch die Gegenstände der unabhängigen Patentansprüche gelöst. Vorteilhafte Weiterbildungen der Erfindung sind durch die Merkmale der abhängigen Patentansprüche gegeben.

Durch die Erfindung ist ein Verfahren zum Betreiben eines Doppelkupplungsgetriebes eines Kraftfahrzeugs bereitgestellt. Während einer Fahrt des Kraftfahrzeugs wird ein Drehmoment einer Kurbelwelle eines Motors über das Doppelkupplungsgetriebe zu einem Getriebeausgang des Doppelkupplungsgetriebes übertragen, von wo aus es dann auf Räder des Kraftfahrzeugs weitergeleitet werden kann. Das erfindungsgemäße Verfahren sieht hierbei vor, dass eine erste Kupplung mittels einer befüllten ersten Kupplungshydraulik geschlossen betrieben wird und hierdurch einen ersten Getriebezweig, in welchem ein aktueller Istgang eingelegt oder eingestellt ist, antreibt. Die besagte Kupplungshydraulik weist insbesondere einen Nehmerzylinder auf, der befüllt ist und dessen Kolben somit die Kupplung durch Ausrücken des Kolbens geschlossen hält.

Eine zweite Kupplung des Doppelkupplungsgetriebes wird währenddessen mittels einer bis zu einer Anschlagstellung entleerten zweiten Kupplungshydraulik geöffnet betrieben. Bei dem Doppelkupplungsgetriebe sind die Kupplungen also selbstöffnend, indem bei entleerter Kupplungshydraulik die jeweilige Kupplung geöffnet ist.

Für einen Gangwechsel in einen neuen Sollgang findet nun eine Vorwahlphase statt. In der Vorwahlphase wird in einem zweiten Getriebezweig eine Drehbewegung des Sollganges mit dem Getriebeausgang synchronisiert und dann der synchronisierte Sollgang entsperrt und dann eingelegt. Durch das Synchronisieren der Drehbewegung werden also Zahnräder des Sollganges in ihre Drehbewegung beschleunigt oder abgebremst, sodass sie synchron mit einem Zahnrad laufen, das bereits mit dem Getriebeausgang mitdreht. Bei synchroner Drehbewegung wird der Sollgang entsperrt, sodass er sich schließlich einlegen lässt. Denn das Entsperren ermöglicht das Weiterbewegen des Sollganges, sodass das Zahnrad des Sollganges in das mit dem Getriebeausgang gekoppelte Zahnrad greifen kann. Dieses Weiterbewegen des Zahnrades ist dann das eigentliche Einlegen des Ganges.

Einen zweiten Aspekt des Gangwechsels stellt das Schließen der zweiten Kupplung dar. Bei der zweiten Kupplung wird hierzu die zweite Kupplungshydraulik befüllt und hierdurch die zweite Kupplung bis zu einem Berührpunkt, ab welchem die zweite Kupplung ein Drehmoment von der Kurbelwelle auf den zweiten Getriebezweig überträgt, befüllt. Das Befüllen geht darüber hinaus weiter, bis die Kupplung geschlossen wird. Der besagte Berührpunkt ist der aus dem Stand der Technik bekannte Touch Point oder Kiss Point oder Schleifpunkt.

Um nun den Wechsel in den Sollgang zu beschleunigen, also ein schnelleres Schließen der zweiten Kupplung bei eingelegtem Sollgang zu ermöglichen, ist erfindungsgemäß vorgesehen, dass das Befüllen der zweiten Kupplungshydraulik bereits während der Vorwahlphase begonnen wird und die zweite Kupplungshydraulik in der Vorwahlphase aber höchstens bis zum Erreichen des Berührpunktes der zweiten Kupplung befüllt wird. Mit anderen Worten wird die zweite Kupplung bereits teilweise aus ihrer Offenstellung heraus zum Berührpunkt hin bewegt, ohne dass sie durch die Übertragung eines Drehmoments die Vorwahlphase stört, also das Synchronisieren, Entsperren und Einlegen des Sollganges. Die zweite Kupplung kann also bis zur Vorwahlphase mit bis zur Anschlagstellung entleerter zweiter Kupplungshydraulik betrieben werden und damit geschont oder verschleißfrei sein. Erst zum Gangwechsel hin wird die zweite Kupplungshydraulik befüllt, und zwar derart früh, dass ab dem Einlegen des Sollganges die zweite Kupplung schon so weit geschlossen ist, dass sie vom Berührpunkt aus verzögerungsfrei ein Drehmoment über den zweiten Getriebezweig mit dem Sollgang übertragen kann.

Bei der Erfindung ist vorgesehen, dass die zweite Kupplungshydraulik stufenweise mit zumindest einer Zwischenstufe, in welcher ein Sollbefülldruck der zweiten Kupplungshydraulik konstant ist, befüllt wird. Mit anderen Worten ist das Befüllen kein durchgängiger, homogener Befüllvorgang. Stattdessen wird durch Vorsehen zumindest einer Zwischenphase das Befüllen der zweiten Kupplungshydraulik abgestimmt auf die einzelnen Stufen der Vorwahlphase, nämlich das Synchronisieren, Entsperren und Einlegen. Somit wird berücksichtigt, dass die zweite Kupplung nicht von Anfang an zu Beginn der Vorwahlphase bis zum Berührpunkt geschlossen sein darf, da sich ansonsten auch hierdurch die beschriebenen Verschleißeffekte beim Durchführen der Vorwahlphase mit bereits bis zum Berührpunkt geschlossener zweiten Kupplung ergibt, wie dies im Stand der Technik der Fall ist.

Zu der Erfindung gehören auch optionale Weiterbildungen, durch deren Merkmale sich zusätzliche Vorteile ergeben.

Gemäß einer Weiterbildung wird die zweite Kupplungshydraulik mit einer Hydraulikflüssigkeit bis zu mehr als 60 Prozent, insbesondere mehr als 70 Prozent, eines Endvolumens, bei welchem die Kupplung vollständig geschlossen ist, bereits während der Vorwahlphase befüllt. Dies ermöglicht es, nach der Vorwahlphase mit wenig Hydraulikflüssigkeit, nämlich mit dem Restvolumen, das Überwechseln von dem Istgang zum Sollgang zu vollziehen. Es ist also möglich, mehr als 60 Prozent, insbesondere mehr als 70 Prozent, der benötigten Hydraulikflüssigkeit zum Schließen der zweiten Kupplung bereits in die zweite Kupplungshydraulik einzufüllen, ohne hierbei die Vorwahlphase zu stören oder zu beeinträchtigen.

Nachdem die Vorwahlphase abgeschlossen ist und die zweite Kupplung bis zum Berührpunkt geschlossen ist, kann der eigentliche Übergang vom Istgang in den Sollgang erfolgen, das heißt ein Blending (Überblenden) oder Übergang zwischen der ersten Kupplung und der zweiten Kupplung durchgeführt werden. Eine Weiterbildung der Erfindung sieht hierzu vor, dass nach der Vorwahlphase die erste Kupplung durch zumindest teilweises Entleeren der ersten Kupplungshydraulik geöffnet und gleichzeitig durch weiteres Befüllen der zweiten Kupplungshydraulik über den Berührpunkt hinaus die zweite Kupplung geschlossen wird, derart, dass das an den Kupplungsausgang übertragene Drehmoment des Motors konstant ist. Hierdurch findet also ein Wechsel vom Istgang in den Sollgang statt, ohne dass an den Rädern eine Drehmomentänderung erfolgt, sodass also insbesondere Personen im Kraftfahrzeug kein Rucken beim Antrieb des Kraftfahrzeugs spüren. Hierdurch ist auch die Fahrsicherheit verbessert, da die Räder nicht durch ein ruckartiges Ändern des Antriebsmoments die Haftung am Fahrbahnuntergrund verlieren können.

Ein besonderer Vorteil kann erreicht werden, falls der Sollgang kleiner als der aktuell wirksame Istgang ist. Dies wird als Herunterschalten bezeichnet. Es wird also von einer Gangstufe n in eine Gangstufe n-1 geschaltet. Eine Weiterbildung der Erfindung sieht vor, dass bereits während der Vorwahlphase eine Drehzahl der Kurbelwelle des Motors, das heißt eine Drehzahl des Motors selbst, durch teilweises Entleeren der ersten Kupplungshydraulik vergrößert wird. Denn dies bewirkt ein teilweises Öffnen der ersten Kupplung, wodurch das an der Kurbelwelle vom Motor erzeugte Drehmoment nicht mehr ausschließlich an den Kupplungsausgang übertragen wird, sodass das Differenzdrehmoment den Motor beschleunigt, das heißt die Drehzahl erhöht. Hierdurch ergibt sich der Vorteil, dass beim Schließen der zweiten Kupplung der Motor bereits die Synchrondrehzahl näher an derjenigen des neuen Sollgangs liegt und somit der Motor nicht über die zweite Kupplung durch Schließen derselben beschleunigt werden muss.

Eine Weiterbildung hierzu löst das Problem, dass durch teilweises Öffnen der ersten Kupplung der Motor seine Drehzahl vergrößert und hierbei über die Synchrondrehzahl hinaus eine zu hohe Drehzahl bekommen kann. Um dies zu verhindern, sieht eine Weiterbildung vor, dass nach der Vorwahlphase ein Überschwingen der Drehzahl durch weiteres Befüllen der zweiten Kupplungshydraulik gedämpft oder verhindert wird. Mit anderen Worten wird während der Vorwahlphase die erste Kupplung teilweise geöffnet, sodass der Motor beschleunigt und dann das Hochdrehen oder Beschleunigen des Motors mittels der zweiten Kupplung durch teilweises Schließen derselben mittels der zweiten Kupplungshydraulik gedämpft oder abgebremst, sodass der Motor dann bei eine vorbestimmten Drehzahl abgefangen wird.

Eine Weiterbildung betrifft den Spezialfall, dass mittels des Doppelkupplungsgetriebes nicht um eine Gangstufe, sondern um zwei Gangstufen geschaltet werden soll. Diese Weiterbildung sieht vor, dass durch ein Doppelschalten von dem Istgang zu einem um zwei Gangstufen verschiedenen Zielgang geschaltet wird und dabei der Sollgang, von dem bisher die Rede war, ein Zwischengang ist, in den zunächst ausgehend vom Istgang mittels der zweiten Kupplung geschaltet wird. Nach dem Schließen der zweiten Kupplung wird bei wirksamem Zwischengang, während also der Zwischengang zum Übertragen des Drehmoments vom Motor zum Getriebeausgang genutzt wird, als ein neuer Sollgang der Zielgang in einer weiteren Vorwahlphase in dem ersten Kupplungszweig synchronisiert, entsperrt und eingelegt. Während der weiteren Vorwahlphase wird die erste Kupplungshydraulik befüllt, aber höchstens bis zu einem Berührpunkt der ersten Kupplung. Mit anderen Worten wird also in der Vorwahlphase für die erste Kupplung genauso das Befüllen gleichzeitig mit der Vorwahlphase betrieben, wie es bereits im Zusammenhang mit der zweiten Kupplung bereits beschrieben worden ist. Durch das enge Verzahnen der Schaltvorgänge wird beim Doppelschalten auf die Synchrondrehzahl des Zielgangs ein gleichbleibendes Motordrehmoment ermöglicht. Mit anderen Worten kann der Motor durchgehend mit Abgabe desselben Drehmoments betrieben werden und hierbei um zwei Gangstufen geschaltet werden.

Eine Weiterbildung sieht hierzu eine zusätzliche zeitliche Verkürzung des Doppelschaltens vor, indem bei dem Doppelschalten die erste Kupplungshydraulik durchgehend zumindest teilbefüllt bleibt. Mit anderen Worten wird nach dem Einlegen des Zwischengangs und damit nach dem Auslegen des ursprünglichen Istganges die erste Kupplungshydraulik gar nicht erst ganz entleert, sondern wird stattdessen teilbefüllt, aber unterhalb des Berührpunktes, weiterbetrieben, bis sie dann während der weiteren Vorwahlphase wieder bis zum Berührpunkt befüllt wird, um den Zielgang einzustellen oder einzulegen.

Wie bereits ausgeführt, kann das erfindungsgemäße Verfahren durch eine Steuervorrichtung für ein Doppelkupplungsgetriebe eines Kraftfahrzeugs durchgeführt werden. Die Erfindung sieht somit eine solche Steuervorrichtung vor, die dazu eingerichtet ist, elektrohydraulische Aktoren zum Befüllen und Entleeren einer jeweiligen Kupplungshydraulik einer ersten Kupplung und einer zweiten Kupplung des Doppelkupplungsgetriebes gemäß einer Ausführungsform des erfindungsgemäßen Verfahrens zu steuern. Durch die elektrohydraulischen Aktoren wird insbesondere ein hydraulischer Geberzylinder für eine Hydraulikflüssigkeit gestellt, welcher dann auf einen Nehmerzylinder der Kupplungshydraulik wirkt. Beispielsweise kann als elektrohydraulischer Aktor ein Elektromotor vorgesehen sein, der über ein Schneckengetriebe einen Kolben des Geberzylinders bewegt. Entsprechende elektrohydraulische Aktoren sind an sich aus dem Stand der Technik bekannt.

Schließlich gehört zu der Erfindung auch das eigentliche Kraftfahrzeug mit einem Doppelkupplungsgetriebe, wobei das Doppelkupplungsgetriebe eine Ausführungsform der erfindungsgemäßen Steuervorrichtung aufweist. Das erfindungsgemäße Kraftfahrzeug ist bevorzugt als Kraftwagen, insbesondere als Personenkraftwagen oder Lastkraftwagen, ausgestaltet.

Im Folgenden ist ein Ausführungsbeispiel der Erfindung beschrieben. Hierzu zeigt:
- Fig. 1: eine schematische Darstellung einer Ausführungsform des erfindungsgemäßen Kraftfahrzeugs;
- Fig. 2: drei Diagramme mit schematisierten zeitlichen Verläufen von Betriebsparametern eines Kupplungsgetriebes des Kraftfahrzeugs von Fig. 1; und
- Fig. 3: ein Diagramm mit weiteren schematisierten zeitlichen Verläufen von Betriebsparametern des Kupplungsgetriebes.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

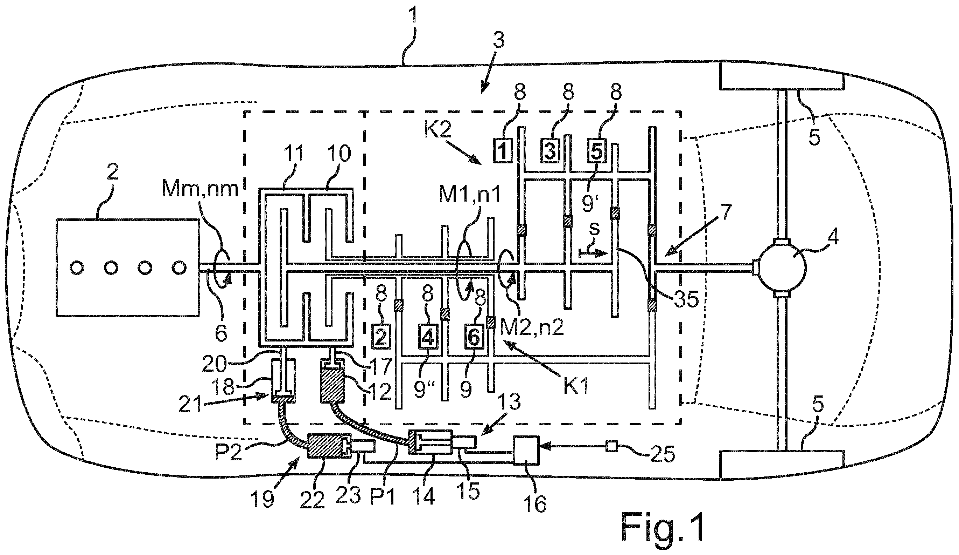

Fig. 1 zeigt ein Kraftfahrzeug 1, bei dem es sich beispielsweise um einen Kraftwagen, insbesondere einen Personenkraftwagen, handeln kann. Dargestellt sind ein Verbrennungsmotor oder kurz Motor 2, ein Doppelkupplungsgetriebe 3, ein Differenzial 4 und Antriebsräder 5. Während einer Fahrt des Kraftfahrzeugs 1 erzeugt der Motor 2 an einer Kurbelwelle 6 ein Antriebsmoment oder Motormoment Mm, das über die Kurbelwelle 6 in das Doppelkupplungsgetriebe 3 übertragen wird und von diesem nach einer Übersetzung an einen Getriebeausgang 7 bereitgestellt und über das Differenzial 4 auf die Antriebsräder 5 übertragen wird. Hierdurch treibt der Motor 2 die Räder 5 an und damit das Kraftfahrzeug 1.

Das Doppelkupplungsgetriebe 3 weist einen ersten Getriebezweig K1 und einen zweiten Getriebezweig K2 auf. Beispielhaft ist in Fig. 1 eine Aufteilung von Getriebegängen oder Gangstufen 8 auf die beiden Getriebezweige K1, K2 gezeigt. Für die weitere Erläuterung des Ausführungsbeispiels sei angenommen, dass zu dem in Fig. 1 dargestellten Zeitpunkt die Gangstufe "6" eingelegt ist, das heißt die Gangstufe "6" den aktuellen Istgang 9 darstellt.

Das Doppelkupplungsgetriebe 3 weist des Weiteren eine erste Kupplung 10 und ein zweite Kupplung 11 auf. Die erste Kupplung 10 ist geschlossen, sodass das Motormoment Mm über die erste Kupplung 10 in den ersten Getriebezweig K1 auf den Istgang 9 übertragen wird und somit die Gangstufe des Istganges 9 für die Übersetzung des Motormoments Mm hin zum Getriebeausgang 7 wirksam ist. Durch die erste Getriebezweig K1 wirkt somit ein Kupplungsmoment M1, was in Fig. 1 der besseren optischen Zuordnung an einer Hohlwelle des ersten Getriebezweigs K1 dargestellt ist. Die Kurbelwelle 6 dreht sich dabei mit einer Antriebsdrehzahl nm und entsprechend der erste Getriebezweig K1 mit einer Getriebedrehzahl n1. Auch die Getriebedrehzahl n1 ist nur der besseren optischen Zuordnung in Fig. 1 an der Hohlwelle dargestellt.

Die zweite Kupplung 11 ist währenddessen geöffnet. Ein Kupplungsmoment M2 des zweiten Kupplungszweiges K2 weist entsprechend einen undefinierten Wert auf, weil sich der zweite Getriebezweig K2 frei drehen kann. Eine Getriebedrehzahl des zweiten Kupplungsgetriebes K2 ist hier mit n2 bezeichnet. Das Kupplungsmoments M2 und die Getriebedrehzahl n2 sind in Fig. 1 ebenfalls nur der besseren optischen Zuordnung halben an der zur Hohlwelle korrespondierenden Welle eingezeichnet.

Der geschlossene Zustand der ersten Kupplung 10 wird durch eine erste Kupplungshydraulik 12 bewirkt. Die Kupplungshydraulik 12 kann beispielsweise einen Nehmerzylinder aufweisen. Die Kupplungshydraulik 12, das heißt der Nehmerzylinder, ist befüllt. Dies wird durch einen elektrohydraulischen Aktor 13 bewirkt, der beispielsweise einen Geberzylinder 14 und einen Elektromotor 15 aufweisen kann. Eine Steuervorrichtung 16 steuert den Elektromotor 15. Durch den Aktor 13 ist ein Hydraulikdruck P1 in der Getriebehydraulik 12 derart groß eingestellt, dass ein Ausrücker oder Gangsteller 17 vollständig ausgerückt oder ausgefahren ist und hierdurch die Kupplung 10 geschlossen ist.

Die Offenstellung der zweiten Kupplung 11 ist durch eine zweite Kupplungshydraulik 18 bewirkt, bei der es sich ebenfalls um einen Nehmerzylinder handeln kann. Ein elektrohydraulischer Aktor 19 ist von der Steuervorrichtung 16 derart angesteuert, dass ein Hydraulikdruck P2 in der zweiten Kupplungshydraulik 18 derart gering ist, dass ein Ausrücker oder Gangsteller 20 der zweiten Kupplungshydraulik 18 bis zu einer Anschlagstellung 21 eingefahren ist und hierdurch die zweite Kupplung 11 geöffnet ist. Der Aktor 19 kann hierzu in derselben Weise wie der Aktor 13 einen Geberzylinder 22 und einen Elektromotor 23 aufweisen, der wiederum durch die Steuervorrichtung 16 gesteuert sein kann.

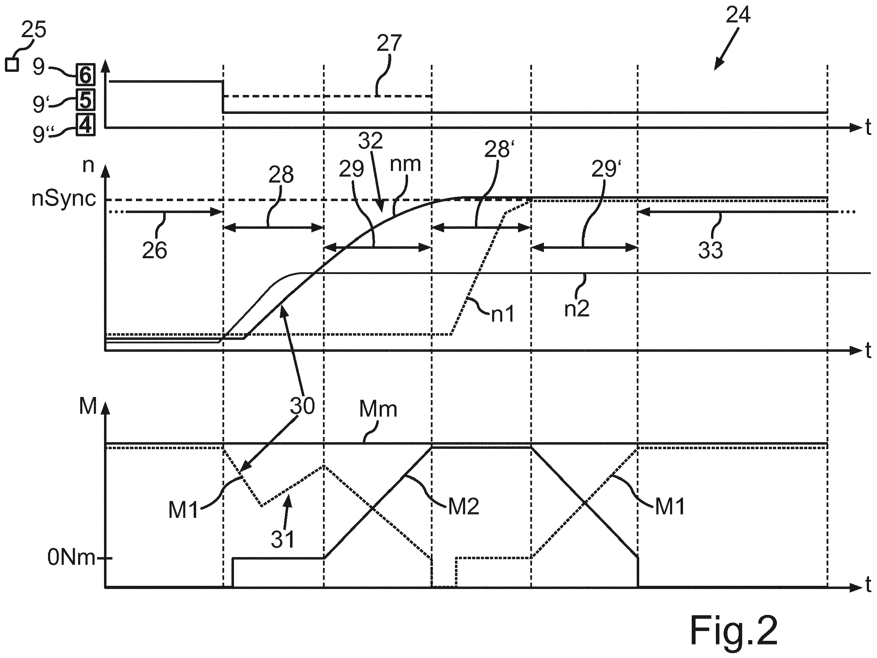

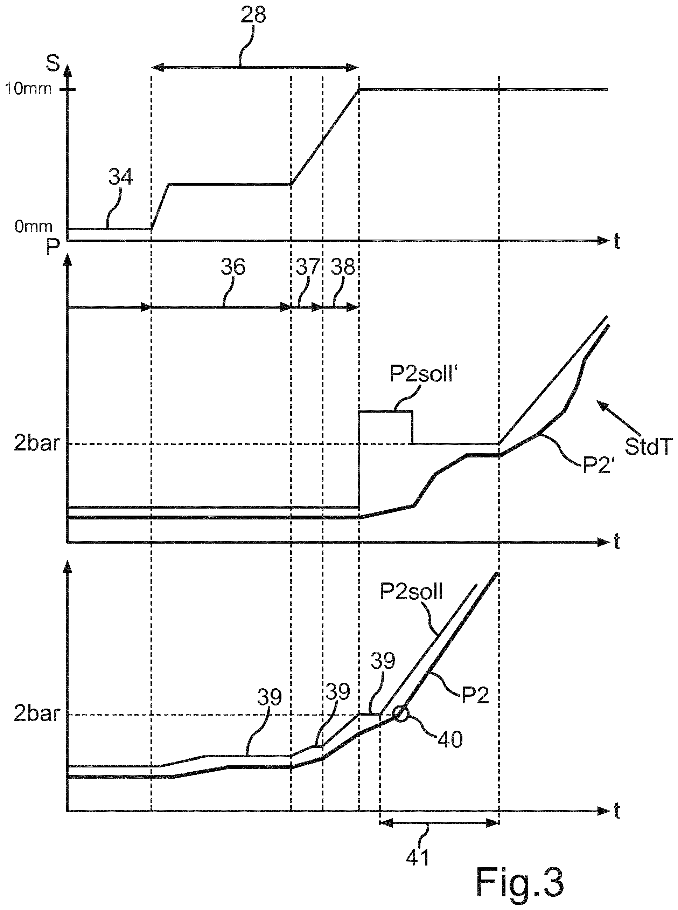

Im Folgenden ist anhand von Fig. 2 und Fig. 3 veranschaulicht, wie bei dem Kraftfahrzeug 1 ein Gangwechsel erfolgen kann. Es kann ein Gangwechsel um eine Gangstufe von einem Istgang zu einem Sollgang 9' erfolgen, also um eine einzelne Gangstufe geschaltet werden, oder auch ein Doppelschalten 24 um zwei Gangstufen auf einen Zielgang 9".

Fig. 2 zeigt hierzu über der Zeit t zeitliche Verläufe einer Sollgangvorgabe 25, der Drehzahlen n und der Drehmomente M.

Während einer ersten Fahrphase 26 herrscht der Betriebszustand vor, wie er in Zusammenhang mit Fig. 1 beschrieben worden ist. Mit anderen Worten ist der Istgang 9 eingelegt und das Motormoment Mm wird über den ersten Getriebezweig K1 als Getriebemoment M1 an den Getriebeausgang 7 übertragen. Sodann erfolgt das Doppelschalten, wobei zunächst der Sollgang 9' als ein Zwischengang 27 vorgegeben wird und erst dann in den Zielgang 9" geschaltet wird. Zum Schalten in den Zwischengang 27, was dem Schalten um eine einzelne Schaltstufe entspricht, erfolgt in einer Vorwahlphase 28 das Synchronisieren, Entsperren und Einlegen des Sollganges 9'. Dies ist weiter unten im Zusammenhang mit Fig. 3 genauer erläutert.

Nach dem Ende der Vorwahlphase erfolgt eine Überschneidungsphase 29, während welcher die Übertragung des Motormoments Mm von der ersten Kupplung 10 auf die zweite Kupplung 11 überschnitten oder übergeblendet wird. Dies erfolgt durch entsprechendes Einstellen der Hydraulikdrücke P1, P2 in den Kupplungshydrauliken 12, 18. Anschließend ist der Sollgang 9' als neuer Istgang aktiv und die Übertragung des Motormoments Mm erfolgt vollständig über den zweiten Getriebezweig K2. Sodann folgt eine weitere Vorwahlphase 28', in welcher der ersten Getriebezweig K1 der Zielgang 9" synchronisiert, entsperrt und eingelegt wird. Anschließend kann eine weitere Überschneidungsphase 29' erfolgen, um wieder von der zweiten Kupplung 11 auf die erste Kupplung 10 überzublenden.

In Fig. 2 ist gezeigt, wie in der Vorwahlphase 28 ein teilweises Öffnen der ersten Kupplung 10 durch entsprechendes Einstellen des Hydraulikdruckes P1 erfolgt und hierdurch eine Drehzahlbeschleunigung 30 des Motors 2 und damit der Kurbelwelle 6 erreicht wird, indem der Motor ein konstantes Motormoment Mm erzeugt, hiervon aber nur ein Teil über den ersten Getriebezweig K1 als Getriebemoment M1 übertragen wird. Damit der Motor nicht über eine Zieldrehzahl oder Synchrondrehzahl nsync hinaus beschleunigt, erfolgt zunächst ein Dämpfen 31 der Drehzahlbeschleunigung der Motordrehzahl nm mittels der ersten Kupplung 10 in der Vorwahlphase 28 und dann aber ein abschließendes Dämpfen 32 in der Überschneidungsphase 29 bereits mittels der zweiten Kupplung 11, indem über diese ein graduell größer werdender Anteil des Motormoments Mm als Getriebemoment M2 übertragen wird.

In der zweiten Vorwahlphase 28' weist der Motor 2 bereits die Synchrondrehzahl nsync auf und es kann direkt bei geschlossener zweiter Kupplung 11 wieder mit dem Befüllen der Kupplungshydraulik 12 zum Schließen der ersten Kupplung 10 begonnen werden.

In der zweiten Überschneidungsphase 29' wird dann wieder die zweite Kupplung 11 geöffnet und die erste Kupplung 10 entsprechend geschlossen und hierdurch das übertragende Motormoment Mm graduell von dem zweiten Getriebezweig K2 auf den ersten Getriebezweig K1 übergeblendet. In der abschließenden Fahrphase 33 wird dann wieder das Motormoment Mm über den ersten Getriebezweig K1, aber bei der Synchrondrehzahl nsync bei geschlossener erster Kupplung 10 und geöffneter zweiter Kupplung 11 übertragen.

Während der jeweiligen Vorwahlphasen 28, 28' überträgt dabei die jeweilige Zielkupplung, also in der Vorwahlphase 28 die zweite Kupplung 11 und in der Vorwahlphase 28' die erste Kupplung 10, jeweils kein Drehmoment (0 Nm) auf den jeweiligen Getriebezweig K2, K1, um das Synchronisieren, Entsperren und Einlegen nicht zu beeinträchtigen.

Fig. 3 veranschaulicht, wie in der Vorwahlphase 28 dennoch die zweite Kupplung 11 so weit geschlossen wird, dass sie zwar kein Drehmoment (0 Nm) auf den zweiten Getriebezweig K2 überträgt, aber dennoch für die anschließende Überschneidungsphase 29 vorbereitet ist, um mit geringer Zeitverzögerung die Überschneidungsphase 29 beginnen zu können. Entsprechendes gilt auch für die Vorwahlphase 28' in Bezug auf die erste Kupplung 10.

Fig. 3 veranschaulicht über der Zeit t einen Stellweg s eines (nicht dargestellten Gangstellers des zweiten Getriebezweigs K2 (siehe auch Fig. 1), wobei die angegebenen Weglängen (10 Millimeter) nur beispielhaft sind. Des Weiteren ist ein zeitlicher Verlauf des Hydraulikdruckes P2 für die zweite Getriebehydraulik 18 dargestellt. Als Referenz ist der Stand der Technik StdT in Bezug auf die zweite Getriebehydraulik 18 veranschaulicht, was hier als Hydraulikdruck P2' dargestellt ist.

Vor der Vorwahlphase 28 ist die zweite Kupplung 11 vollständig geöffnet, das heißt die zweite Getriebehydraulik 18 befindet sich in der Anschlagstellung 21 und damit die zweite Kupplung 11 in einer Offenstellung 34, was hier als Referenzstrecke s = 0 Millimeter angegeben ist. Zum Synchronisieren des Sollganges 9' wird mittels des Gangstellers ein entsprechendes Zahnrad 35 bewegt (siehe Fig. 1), sodass sich der Stellweg s verändert. Hierdurch wird die Getriebedrehzahl n2 synchronisiert, wobei sich durch die Übersetzungsverhältnisse am Sollgang 9' eine entsprechende Getriebedrehzahl n2 einstellt. Nach dem Synchronisieren 36 kann das Entsperren 37 erfolgen, das heißt der Gangsteller kann dahingehend freigegeben werden, dass er weiterbewegt werden kann, ohne dass es zu einer Beschädigung des Zahnrads 35 kommt. Anschließend erfolgt das Einlegen 38, bei welchem das Zahnrad 35 endgültig einen Formschluss mit einem korrespondierenden Zahnrad eingeht.

Im Stand der Technik StdT erfolgt erst nach dem Einlegen 38 eine Veränderung des Sollwerts P2soll' der Getriebehydraulik, um hierdurch die zweite Kupplung 11 zu schließen.

Im Gegensatz dazu erfolgt bei dem Kraftfahrzeug 1 durch die Steuervorrichtung 16 bereits während der Vorschaltphase 28 bevorzugt in mehreren Zwischenstufen 39 bereits während der Synchronisierung 36, des Entsperrens 37 und des Einlegens 38 durch Einstellen eines entsprechenden Kupplungs-Solldruckes P2soll ein Befüllen der zweiten Getriebehydraulik 18, sodass also der Ausrücker 20 bereits aus seiner Anschlagstellung 21 bewegt wird und hierdurch die zweite Kupplung 11 teilweise geschlossen wird. Hierbei wird darauf geachtet, dass die zweite Kupplung 11 während der Vorwahlphase 28 höchstens bis zu einem Berührpunkt 40 geschlossen wird, sodass die zweite Kupplung 11 während der Vorwahlphase 28 in der beschriebenen Weise kein Drehmoment (0 Nm) von der Kurbelwelle 6 auf den zweiten Getriebezweig K2 überträgt (siehe Fig. 2). Unmittelbar nach der Vorwahlphase 28 hat die zweite Kupplung 11 bereits den Berührpunkt 40 erreicht. Durch weiteres Schließen der zweiten Kupplung 11, das heißt durch weiteres Erhöhen des Hydraulikdrucks P2, wird somit erreicht, dass sofort ein Getriebemoment M2 größer als 0 über den zweiten Getriebezweig K2 übertragen werden kann (siehe Fig. 2). Hierdurch ergibt sich eine Schaltzeitreduzierung 41 in Vergleich zum Stand der Technik StdT, da dort nach der Vorwahlphase 28 die zweite Kupplung 11 zunächst aus der Offenstellung 34 heraus geschlossen werden muss, sodass zunächst eine Befüllung der zweiten Kupplungshydraulik 18 bis zum Berührpunkt nötig ist.

Das sequentielle Abarbeiten der einzelnen Phasen im Stand der Technik StdT kann somit sehr lange dauern und speziell bei Schaltarten, die mehrere Gang- beziehungsweise Kupplungswechsel beinhalten (beispielsweise das beschriebene Doppelschalten 24 zum indirekten Rückschalten) für den Fahrer in unerwünschter Weise spürbar sein.

Daher werden bei dem Kraftfahrzeug 1 die Zustände der Vorwahl (Synchronisieren, Entsperren, Einlegen) und das Befüllen der Kupplungshydraulik gleichzeitig durchgeführt, das heißt parallelisiert, und dabei koordiniert. Mit Start des Einlegevorgangs kann bereits mit dem Befüllen der Kupplung auf ein Zwischenniveau beziehungsweise in Richtung des Zwischenniveaus begonnen werden. Je nach Fortschritt des Einlegevorgangs kann die Kupplung weiter in Richtung Zielniveau befüllt werden, das heißt bis zum Berührpunkt 40. Der Fortschritt des Einlegens, das heißt die einzelnen Phasen Synchronisieren, Entsperren, Einlegen wird durch die Zwischenstufe 39 berücksichtigt, sodass die Kupplungshydraulik nicht weiter befüllt wird, als dies zur entsprechenden Phase (Synchronisieren, Entsperren, Einlegen) möglich ist.

Der Vorteil dieser Funktionalität besteht nicht nur darin, den Schaltablauf dynamischer zum Erreichen der Schaltzeitreduzierung 41 auszugestalten, sondern auch darin, die Schlupfphasen während des Schaltablaufes zu verkürzen und dadurch den Verschleiß der Kupplungen 10, 11 zu reduzieren.

Die Abstimmung, bis zu welchem Grad die Kupplungshydraulik bereits während einer Vorwahlphase befüllt werden kann, das heißt die Abstimmung des Grades der Parallelisierung, muss von der konkreten Ausgestaltung des Doppelkupplungsgetriebes abhängig gemacht werden. Es kann ermöglicht sein, die Kupplungshydraulik bereits über 60 Prozent, insbesondere über 70 Prozent, zu befüllen, da oftmals erst dann der Berührpunkt erreicht ist. Des Weiteren muss eine entsprechende Entleerung der bereits vorbefüllten Kupplung umgesetzt werden, sofern der Einlegevorgang aufgrund der Vorbefüllung nicht abgeschlossen werden kann. Die beschriebene Parallelisierung kann bei allen Schaltarten (Zug-Hoch, Schub-Hoch, Zug-Rück, Schub-Rück, Zwischengas) umgesetzt werden, bei denen im Stand der Technik ein Befüllvorgang auf einen Einlegevorgang folgt.

Insgesamt zeigt das Beispiel, wie durch die Erfindung in einem Doppelkupplungsgetriebe einzelne Schaltablaufphasen parallelisiert werden können.

## Patentansprüche

1. Verfahren zum Betreiben eines Doppelkupplungsgetriebes (3) eines Kraftfahrzeugs (1), wobei
- eine erste Kupplung (10) mittels einer befüllten ersten Kupplungshydraulik (12) geschlossen betrieben wird und hierdurch einen ersten Getriebezweig (K1), in welchem ein aktueller Istgang (9) eingestellt ist, antreibt, so dass ein Drehmoment (Mm) von einer Kurbelwelle (6) eines Motor (2) zu einem Getriebeausgang (7) übertragen wird,
- eine zweite Kupplung (11) mittels einer bis zu einer Anschlagsstellung (21) entleerten zweiten Kupplungshydraulik (18) geöffnet betrieben wird, und
- in einer Vorwahlphase (28) für einen Gangwechsel in einen Sollgang (9') in einem zweiten Getriebezweig (K2) eine Drehbewegung (n2) des Sollgangs (9') mit dem Getriebeausgang (7) synchronisiert (36) und der synchronisierte Sollgang (9') entsperrt (37) und eingelegt (38) wird, und
- bei der zweiten Kupplung (11) die zweite Kupplungshydraulik (18) befüllt wird und hierdurch die zweite Kupplung (11) bis zu einem Berührpunkt (40), ab welchem die zweite Kupplung (11) ein Drehmoment (M2) von der Kurbelwelle (6) auf den zweiten Getriebezweig (K2) überträgt, und darüber hinaus geschlossen wird,
wobei das Befüllen der zweiten Kupplungshydraulik (18) bereits während der Vorwahlphase (28) begonnen wird und die zweite Kupplungshydraulik (18) in der Vorwahlphase (28) höchstens bis zum Erreichen des Berührpunkts (40) der zweiten Kupplung (11) befüllt wird, **dadurch gekennzeichnet, dass** die zweite Kupplungshydraulik (18) stufenweise mit zumindest einer Zwischenstufe (39), in welcher ein Sollbefülldruck (P2soll) konstant ist, befüllt wird.

2. Verfahren nach Anspruch 1, wobei die zweite Kupplungshydraulik (18) mit einer Hydraulikflüssigkeit bis zu mehr als 60 Prozent, insbesondere mehr als 70 Prozent, eines Endvolumens, bei welchem die zweite Kupplung (11) vollständig geschlossen ist, während der Vorwahlphase (28) befüllt wird.

3. Verfahren nach einem der vorhergehenden Ansprüche, wobei nach der Vorwahlphase (28) die erste Kupplung (10) durch zumindest teilweises Entleeren der ersten Kupplungshydraulik (12) geöffnet und gleichzeitig durch weiteres Befüllen der zweiten Kupplungshydraulik (18) über den Berührpunkt (40) hinaus die zweite Kupplung (11) geschlossen wird, derart dass das an den Kupplungsausgang (7) übertragene Drehmoment (Mm) des Motors (2) konstant ist.

4. Verfahren nach einem der vorhergehenden Ansprüche, wobei der Sollgang (9') kleiner als der aktuell wirksame Istgang (9) ist und bereits während der Vorwahlphase (28) eine Drehzahl (nm) der Kurbelwelle (6) des Motors (2) durch teilweises entleeren der ersten Kupplungshydraulik (12) vergrößert wird.

5. Verfahren nach Anspruch 4, wobei nach der Vorwahlphase (28) ein Überschwingen der Drehzahl (nm) durch weiteres Befüllen der zweiten Kupplungshydraulik (18) gedämpft oder verhindert wird.

6. Verfahren nach einem der vorhergehenden Ansprüche, wobei durch ein Doppelschalten (24) von dem Istgang (9) zu einem um zwei Gangstufen verschiedenen Zielgang (9") geschaltet wird und der Sollgang (9') ein Zwischengang (27) ist und nach dem Schließen der zweiten Kupplung (11) bei wirksamem Zwischengang (27) als ein neuer Sollgang der Zielgang (9") in einer weiteren Vorwahlphase (28') in dem ersten Kupplungszweig (K1) synchronisiert, entsperrt und eingelegt wird und während der weiteren Vorwahlphase (28') die erste Kupplungshydraulik (12) befüllt wird, aber höchstens bis zu einem Berührpunkt der ersten Kupplung (10).

7. Verfahren nach Anspruch 6, wobei bei dem Doppelschalten (24) die erste Kupplungshydraulik (12) durchgehend zumindest teilbefüllt bleibt.

8. Steuervorrichtung (16) für ein Doppelkupplungsgetriebe (3) eines Kraftfahrzeugs (1), die dazu eingerichtet ist, elektrohydraulische Aktoren (13,19) zum Befüllen und entleeren einer jeweiligen Kupplungshydraulik (12,18) einer ersten Kupplung (10) und einer zweiten Kupplung (11) des Doppelkupplungsgetriebes (3) gemäß einem Verfahren nach einem der vorhergehenden Ansprüche zu steuern.

9. Kraftfahrzeug (1) mit einem Doppelkupplungsgetriebe (3), das eine Steuervorrichtung (16) nach Anspruch 8 aufweist.

## Claims

1. Method for operating a dual-clutch transmission (3) of a motor vehicle (1), wherein
- a first clutch (10) is operated in closed mode by means of a filled first clutch hydraulic system (12) and thus drives a first gear branch (K1), in which a current actual gear (9) is set, such that a torque (Mm) is transmitted from a crankshaft (6) of a motor (2) to a gear output (7),
- a second clutch (11) is operated in open mode by means of a second clutch hydraulic system (18) emptied up to an abutment position (21), and
- in a preselection phase (28) for a gearchange into a nominal gear (9') in a second gear branch (K2) a rotational movement (n2) of the nominal gear (9') is synchronised (36) with the gear output (7) and the synchronised nominal gear (9') is unlocked (37) and engaged (38), and
- at the second clutch (11) the second clutch hydraulic system (18) is filled and thus the second clutch (11) up to a contact point (40), after which the second clutch (11) transmits a torque (M2) from the crankshaft (6) onto the second gear branch (K2) and is in addition closed,
wherein the filling of the second clutch hydraulic system (18) is already begun during the preselection phase (28) and the second clutch hydraulic system (18) is filled in the preselection phase (28) at most up until reaching the contact point (40) of the second clutch (11), **characterised in that** the second clutch hydraulic system (18) is filled in stepwise manner with at least one interim stage (39), in which a nominal filling pressure (P2soll) is constant.

2. Method according to claim 1, wherein the second clutch hydraulic system (18) is during the preselection phase (28) filled with a hydraulic fluid up to more than 60%, in particular more than 70%, of an end volume, at which the second clutch (11) is completely closed.

3. Method according to any of the preceding claims, wherein after the preselection phase (28) the first clutch (10) is opened by at least partial emptying of the first clutch hydraulic system (12) and simultaneously the second clutch (11) is closed by further filling of the second clutch hydraulic system (18) beyond the contact point (40), such that the torque (Mm), transmitted to the clutch output (7), of the motor (2) is constant.

4. Method according to any preceding claims, wherein the nominal gear (9') is lower than the current effective actual gear (9) and already during the preselection phase (28) a torque (nm) of the crankshaft (6) of the motor (2) is increased by partial emptying of the first clutch hydraulic system (12).

5. Method according to claim 4, wherein after the preselection phase (28) an overshooting of the torque (nm) is damped or prevented by further filling of the second clutch hydraulic system (18).

6. Method according to any of the preceding claims, wherein by means of a dual switching (24) switching takes place from the actual gear (9) to a target gear (9") different by two gear stages and the nominal gear (9') is an intermediate gear (27) and after the closing of the second clutch (11) when the intermediate gear (27) is effective as a new nominal gear the target gear (9") is in a further preselection phase (28') in the first clutch branch (K1) synchronised, unlocked and engaged and during the further preselection phase (28') the first clutch hydraulic system (12) is filled, but at the maximum up to a contact point of the first clutch (10).

7. Method according to claim 6, wherein at the dual switching (24) the first clutch hydraulic system (12) remains continuously at least partially filled.

8. Control device (16) for a dual-clutch transmission (3) of the motor vehicle (1) which is designed to control electrohydraulic actuators (13, 19) to fill and empty a respective clutch hydraulic system (12, 18) of a first clutch (10) and a second clutch (11) of the dual-clutch transmission (3) according to a method according to any of the preceding claims.

9. Motor vehicle (1) having a dual-clutch transmission (3), which has a control device (16) according to claim 8.

## Revendications

1. Procédé servant à faire fonctionner une transmission à double embrayage (3) d'un de véhicule automobile (1), dans lequel
- un premier embrayage (10) fonctionne de manière fermée au moyen d'un premier système hydraulique d'embrayage (12) rempli et entraîne ainsi une première branche de transmission (K1), dans laquelle un rapport réel (9) instantané est réglé, de sorte qu'un couple de rotation (Mm) soit transmis d'un vilebrequin (6) d'un moteur (2) à une sortie de transmission (7),
- un second embrayage (11) fonctionne de manière ouverte au moyen d'un second système hydraulique d'embrayage (18) vidé jusqu'à une position de butée (21), et
- dans une phase de présélection (28) pour un changement de rapport dans un rapport théorique (9') dans une deuxième branche de transmission (K2), un mouvement de rotation (n2) du rapport théorique (9') est synchronisé (36) avec la sortie de transmission (7) et le rapport théorique (9') synchronisé est débloqué (37) et engagé (38), et
- dans le cas du second embrayage (11), le second système hydraulique d'embrayage (18) est rempli et ainsi le second embrayage (11) jusqu'à un point de contact (40), à partir duquel le second embrayage (11) transfère un couple de rotation (M2) depuis le vilebrequin (6) sur la deuxième branche de transmission (K2) et est fermé en outre,
dans lequel le remplissage du second système hydraulique d'embrayage (18) démarre déjà pendant la phase de présélection (28) et le second système hydraulique d'embrayage (18) est rempli lors de la phase de présélection (28) au maximum jusqu'à atteindre le point de contact (40) du second embrayage (11), **caractérisé en ce que** le second système hydraulique d'embrayage (18) est rempli progressivement avec au moins une étape intermédiaire (39), dans laquelle une pression de remplissage théorique (P2soll) est constante.

2. Procédé selon la revendication 1, dans lequel le second système hydraulique d'embrayage (18) est rempli pendant la phase de présélection (28) d'un liquide hydraulique jusqu'à plus de 60 pour cent, en particulier plus de 70 pour cent, d'un volume final, dans lequel le second embrayage (11) est totalement fermé.

3. Procédé selon l'une quelconque des revendications précédentes, dans lequel après la phase de présélection (28), le premier embrayage (10) est ouvert par un vidage au moins partiel du premier système hydraulique d'embrayage (12) et, de manière simultanée, le second embrayage (11) est fermé par un autre remplissage du second système hydraulique (18) au-delà du point de contact (40) de telle manière que le couple de rotation (Mm), transmis sur la sortie d'embrayage (7), du moteur (2) est constant.

4. Procédé selon l'une quelconque des revendications précédentes, dans lequel le rapport théorique (9') est inférieur au rapport réel (9) actif de manière instantanée et une vitesse de rotation (nm) du vilebrequin (6) du moteur (2) est augmentée déjà pendant la phase de présélection (28) par un vidage partiel du premier système hydraulique d'embrayage (12).

5. Procédé selon la revendication 4, dans lequel après la phase de présélection (28), un dépassement de la vitesse de rotation (nm) est amorti ou empêché par un autre remplissage du second système hydraulique d'embrayage (18).

6. Procédé selon l'une quelconque des revendications précédentes, dans lequel une double commutation (24) permet de passer du rapport réel (9) à un rapport cible (9") différent de deux rapports de vitesse et le rapport théorique (9') est un rapport intermédiaire (27) et après la fermeture du second embrayage (11), dans le cas d'un rapport intermédiaire (27) actif en tant qu'un nouveau rapport théorique, le rapport cible (9") est synchronisé, débloqué et engagé dans une autre phase de présélection (28') dans la première branche d'embrayage (K1) et le premier système hydraulique d'embrayage (12) est rempli pendant l'autre phase de présélection (28'), toutefois au maximum jusqu'à un point de contact du premier embrayage (10).

7. Procédé selon la revendication 6, dans lequel lors de la commutation double (24), le premier système hydraulique d'embrayage (12) reste rempli au moins en partie en continu.

8. Dispositif de commande (16) pour une transmission à double embrayage (3) d'un véhicule automobile (1), qui est mis au point pour commander des actionneurs (13, 19) électrohydrauliques servant à remplir et à vider un système hydraulique d'embrayage (12, 18) respectif d'un premier embrayage (10) et d'un second embrayage (11) de la transmission à double embrayage (3) selon un procédé selon l'une quelconque des revendications précédentes.

9. Véhicule automobile (1) avec une transmission à double embrayage (3) qui présente un dispositif de commande (16) selon la revendication 8.
